(19) Europäisches Patentamt / European Patent Office / Office européen des brevets

(11) **EP 4 700 610 A1**

(12) **EUROPEAN PATENT APPLICATION**
published in accordance with Art. 153(4) EPC

(43) Date of publication:
**25.02.2026 Bulletin 2026/09**

(21) Application number: **24850641.2**

(22) Date of filing: **24.05.2024**

(51) International Patent Classification (IPC):
*G06F 18/214* (2023.01)

(52) Cooperative Patent Classification (CPC):
Y02A 90/10

(86) International application number:
**PCT/CN2024/095341**

(87) International publication number:
**WO 2025/030989 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.08.2023 CN 202310987837**

(71) Applicant: **Kingfar International Inc.**
**Beijing 100085 (CN)**

(72) Inventors:
• **ZHAO, Qichao**
  **Beijing 100085 (CN)**
• **YANG, Ran**
  **Beijing 100085 (CN)**
• **WANG, Qingju**
  **Beijing 100085 (CN)**

(74) Representative: **Di Bernardo, Antonio et al**
**Thinx S.r.l.**
**P.le Luigi Cadorna, 10**
**20123 Milano (IT)**

(54) **TRAINING METHOD AND APPARATUS FOR HUMAN-FACTOR INTELLIGENCE STATE MONITORING MODEL, AND HUMAN-FACTOR INTELLIGENCE STATE MONITORING METHOD AND APPARATUS**

(57)    Provided in the embodiments of the present application are a training method and apparatus for a human-factor intelligence state monitoring model, and a human-factor intelligence state monitoring method and apparatus. The training method comprises: collecting physiological signals and video signals of persons to construct a training sample set, wherein an initial neural network model comprises a data preprocessing module, a common feature extraction module, a multi-head feature extraction module, etc.; the data preprocessing module preprocessing the physiological signals and the video signals to generate two-dimensional spatial data, and fusing the two-dimensional spatial data; the common feature extraction module performing feature extraction and fusion on a fused signal to generate feature maps on multiple scales, and summarizing the feature maps on multiple scales; the multi-head feature extraction module fusing the feature maps on multiple scales to obtain a high-dimensional feature map, and generating a prediction result on the basis of the high-dimensional feature map; and using the training sample set to train the initial model, so as to finally obtain a human-factor intelligence state monitoring model. In the present application, multivariate time-series data is fused with two-dimensional image data to construct and train a human-factor intelligence state monitoring model, so that faster and more accurate monitoring is implemented.

FIG. 1

**Description**

**CROSS-REFERENCE TO RELATED APPLICATIONS**

This application claims the priority to Chinese Patent Application No. 2023109878379, filed on August 7, 2023 and entitled "TRAINING METHOD AND APPARATUS FOR HUMAN-FACTOR INTELLIGENCE STATE MONITORING MODEL, AND HUMAN-FACTOR INTELLIGENCE STATE MONITORING METHOD AND APPARATUS", the entire contents of which are incorporated herein by reference.

**FIELD**

Embodiments of the present disclosure relate to the field of artificial intelligence technologies, and in particular, to a training method, monitoring method and apparatus for a human-factor intelligent state monitoring model with multimodal synchronous data fusion.

**BACKGROUND**

With the development of the times, people's quality of life has been continuously improved, and automobiles have gradually entered thousands of households and become one of the main means of transportation for travel. However, while the automobiles bring convenience to people's lives and improve travel efficiency, frequent traffic accidents also cause heavy economic losses and pose a threat to people's lives and property safety. Statistics show that among the causes of various traffic accidents, fatigue driving and distracted driving account for a relatively high proportion. Therefore, when timely monitoring may be performed on a human-factor intelligent driving state, traffic accidents caused by poor driving states of human-factor intelligence may be effectively avoided.

At present, the monitoring of human-factor intelligent states is mostly realized by relying on sensors and deep learning models. Various deep learning models are widely used to analyze time-series signals of human-factor intelligent states obtained from the monitoring and extract corresponding features, to determine the human-factor intelligent states. For example, such models include a Recurrent Neural Network (RNN), a Temporal Convolutional Network (TCN), and a Transformer.

RNN and TCN mainly focus on capturing changes between adjacent time points, and easily have problems of gradient explosion and gradient disappearance. Therefore, RNN and TCN cannot effectively capture long-term time-series dependencies, resulting in large errors in prediction results and low monitoring accuracy. In addition, a calculation speed of RNN is relatively slow, leading to its low monitoring efficiency. The improved RNN-long short-term memory network (LSTM) alleviates gradient descent or gradient disappearance to some extent, but it has many parameters and a large model size. Moreover, a calculation method of the LSTM is still blocking (performing sequential processing over time), which cannot achieve parallel computing like Transformer, resulting in high computing costs. Although the Transformer has a natural advantage in modeling long-term dependencies and may perform the parallel computing, due to extremely complex time-series changes in practical situations, it is difficult to mine reliable time-series dependencies only by relying on an attention between discrete time points.

The proposal of a TimesNet network has greatly improved this situation. The TimesNet network utilizes natural multi-periodicity of time series and fast Fourier transform to identify two types of time-series changes in the time series: a change within a period and a change between periods, to obtain a better prediction result. However, the original data targeted by this method are a plurality of one-dimensional time series, and this method cannot process two-dimensional data such as an image or a video.

**SUMMARY**

Embodiments of the present disclosure provide a training method, monitoring method and apparatus for a human-factor intelligent state monitoring model with multimodal synchronous data fusion, to eliminate or improve one or more defects existing in the prior art, and solve problems of low monitoring efficiency, low accuracy, a high computing cost, and inapplicability to two-dimensional data such as an image or a video in an existing monitoring solution for a human-factor intelligent state.

In an aspect, the present disclosure provides a training method for a human-factor intelligent state monitoring model with multimodal synchronous data fusion. The method includes: constructing a training sample set, the training sample set including a plurality of samples, each of the plurality of samples including collected physiological signals and a video signal of a person, and the physiological signals including an electrocardiographic signal, an electroencephalographic signal, and an electromyographic signal; and adding a real label to each of the plurality of samples; constructing an initial neural network model, the initial neural network model including a data preprocessing module, a data fusion module, a public feature extraction module, a multi-head feature extraction module, and a prediction output layer, in which: the public feature extraction module includes a convolution layer, a dense fusion layer, and a spatial pyramid pooling layer; the data preprocessing module is configured to perform first data preprocessing operation on the physiological signals in each sample to obtain two-dimensional physiological signals, extract a key frame of the video signal in each sample by using a predetermined deep learning method, and perform second data preprocessing operation on the key frame to obtain a two-dimensional video signal; the data fusion module is configured to fuse the two-dimensional physiological signals and the two-dimensional video signal in a channel direction to generate a three-dimensional fusion signal; the public feature extraction module is configured to perform feature extraction and fusion on the three-dimensional fusion signal by using the convolution layer and the dense fusion layer to generate feature maps of different scales, and summarize the feature maps through pyramid pooling operations of different scales by using the spatial pyramid pooling layer; the multi-head feature extraction module is configured to fuse the feature maps of different scales obtained by the public feature extraction module to obtain a high-dimensional feature map; and the prediction output layer is configured to generate a prediction result of a corresponding sample according to the high-dimensional feature map; and training the initial neural network model by using the training sample set, constructing a loss between the prediction result and the real label, adjusting a parameter of the initial neural network model by using the loss, and finally obtaining the human-factor intelligent state monitoring model with multimodal synchronous data fusion.

In some embodiments of the present disclosure, the data preprocessing module being configured to perform the first data preprocessing operation on the physiological signals in each sample to obtain the two-dimensional physiological signal further includes the data preprocessing module being configured to: perform fast Fourier transform on each of the electrocardiographic signal, the electroencephalographic signal, and the electromyographic signal in the physiological signals, to obtain a corresponding electrocardiographic amplitude-frequency characteristic map, a corresponding electroencephalographic amplitude-frequency characteristic map, and a corresponding electromyographic amplitude-frequency characteristic map; extract a predetermined number of frequencies with the largest amplitudes from the electrocardiographic amplitude-frequency characteristic map, the electroencephalographic amplitude-frequency characteristic map, and the electromyographic amplitude-frequency characteristic map to obtain an electrocardiographic frequency, an electroencephalographic frequency, and an electromyographic frequency respectively; set a corresponding electrocardiographic cycle, a corresponding electroencephalographic cycle, and a corresponding electromyographic cycle according to the electrocardiographic frequency, the electroencephalographic frequency, and the electromyographic frequency respectively; perform multi-cycle decomposition on the electrocardiographic signal by using the electrocardiographic cycle to generate an electrocardiographic decomposition result, perform the multi-cycle decomposition on the electroencephalographic signal by using the electroencephalographic cycle to generate an electroencephalographic decomposition result, and perform the multi-cycle decomposition on the electromyographic signal by using the electromyographic cycle to generate an electromyographic decomposition result; and perform data dimension raising on the electrocardiographic decomposition result, the electroencephalographic decomposition result, and the electromyographic decomposition result respectively. The data dimension raising refers to stacking the results of the multi-cycle decomposition on a two-dimensional plane. Since different cycles correspond to different data dimensions, data missing caused by different data lengths during stacking is filled with the number 0. After performing the data dimension raising, a two-dimensional electrocardiographic signal, a two-dimensional electroencephalographic signal, and a two-dimensional electromyographic signal are obtained.

In some embodiments of the present disclosure, said performing the second data preprocessing operation on the key frame to obtain the two-dimensional video signal further includes: converting the key frame into a grayscale image to obtain a grayscale key frame; and cutting the grayscale key frame to cause a dimension of the cut grayscale key frame to be the same as dimensions of the two-dimensional electrocardiographic signal, the two-dimensional electroencephalographic signal, and the two-dimensional electromyographic signal.

In some embodiments of the present disclosure, the public feature extraction module is configured to perform feature extraction on an input image by using the convolution layer to generate a first intermediate feature map. A size of the first intermediate feature map is:

$$A = \frac{W - K + 2P}{S} + 1,$$

where $A$ represents a height or width of the first intermediate feature map, $W$ represents a height or width of the input image, $K$ represents a convolution kernel size of the convolution layer, $P$ represents an extended pixel of the convolution layer, and $S$ represents a jump step size of the convolution layer.

In some embodiments of the present disclosure, the dense fusion layer includes a segmentation module, a bottleneck module, a channel merging module, and a $1 \times 1$ convolution block.

In some embodiments of the present disclosure, the first intermediate feature map generated by the convolution layer is inputted into the dense fusion layer for feature fusion to generate a second intermediate feature map. The first intermediate feature map generated by the convolution layer being inputted into the dense fusion layer for feature fusion to generate the second intermediate feature map includes: segmenting, by the segmentation module, the first intermediate feature map into a first segmented image and a second segmented image that are the same in size; performing, by the bottleneck module, two consecutive bottleneck operations on the first segmented image to obtain a first bottleneck image and a first secondary bottleneck image, and performing, by the bottleneck module, the two consecutive bottleneck operations on the second segmented image to obtain a second bottleneck image and a second secondary bottleneck image; performing, by the channel merging module, channel fusion on the first secondary bottleneck image, the first bottleneck image, the first segmented image, the second secondary bottleneck image, the second bottleneck image, and the second segmented image sequentially to obtain a fused feature map; and performing, by the $1\times1$ convolution block, convolution operation on the fused feature map to adjust size.

In some embodiments of the present disclosure, the multi-head feature extraction module further includes the dense fusion layer; and the multi-head feature extraction module is further configured to: perform upsampling operation on the feature map summarized by the public feature extraction module, perform channel merging operation with other feature maps of different scales, perform feature fusion operation by using the dense fusion layer, and perform convolution operation by using a predetermined convolution layer, and finally obtain a plurality of high-dimensional feature maps of different scales based on the upsampling operation, the channel merging operation, the feature fusion operation and the convolution operation.

In some embodiments of the present disclosure, the prediction output layer being configured to generate the prediction result of the corresponding sample according to the high-dimensional feature map further includes the prediction output layer being configured to: perform average pooling operation on the plurality of high-dimensional feature maps and perform activating operation by using a Softmax function to obtain a corresponding prediction result.

In another aspect, the present disclosure provides a human-factor intelligent state monitoring method with multimodal synchronous data fusion. The method includes: collecting physiological signals and a video signal of a person, the physiological signals including an electrocardiographic signal, an electroencephalographic signal, and an electromyographic signal; and inputting the physiological signals and the video signal into the human-factor intelligent state monitoring model with multimodal synchronous data fusion obtained by the training method for the human-factor intelligent state monitoring model with multimodal synchronous data fusion according to any one of the above to generate a corresponding prediction result, to determine a human-factor intelligent state.

In another aspect, the present disclosure provides a training apparatus for a human-factor intelligent state monitoring model with multimodal synchronous data fusion. The apparatus includes: a sample set construction module configured to construct a training sample set by collecting and organizing physiological signals and video signals of a plurality of persons, and add a label to each sample in the training sample set; and a model training module configured to use the training sample set and train, based on the training method for the human-factor intelligent state monitoring model with multimodal synchronous data fusion as described above, an initial neural network model, to obtain a human-factor intelligent state monitoring model with modal data fusion.

In another aspect, the present disclosure provides a human-factor intelligent state monitoring apparatus with multimodal synchronous data fusion. The apparatus includes: a signal collection module configured to collect a physiological signal and a video signal of a person; and a signal analysis module including the human-factor intelligent state monitoring model with multimodal synchronous data fusion obtained by the training method for the human-factor intelligent state monitoring model with multimodal synchronous data fusion according to any one of as described above. The signal analysis module is configured to input the collected physiological signal and the collected video signal into the human-factor intelligent state monitoring model with multimodal synchronous data fusion to obtain the human-factor intelligent state.

In another aspect, the present disclosure further provides a computer-readable storage medium, having a computer program stored thereon. The computer program, when executed by a processor, implements any one of the methods as described above.

In another aspect, the present disclosure further provides a device, including a processor and a memory. The memory is configured to store a computer program. The processor is configured to invoke and run the computer program stored in the memory to execute any one of the methods as described above.

In another aspect, the present disclosure further provides an apparatus, including a processor. The processor is configured to invoke and run a computer program from a memory, causing the apparatus mounted with the device to execute any one of the methods as described above.

In yet another aspect, the present disclosure further provides a computer program product, including a computer program instruction. The computer program instruction causes a computer to execute any one of the methods as described above.

Beneficial effects of the present disclosure are at least as follows.

The present disclosure provides a training method, monitoring method and apparatus for a human-factor intelligent state monitoring model with multimodal synchronous data fusion. The training method includes: constructing a training sample set by collecting physiological signals and a video signal of a person, in which: an initial neural network model including a data preprocessing module, a data fusion module, a public feature extraction module, a multi-head feature extraction module, and the like; the data preprocessing module is configured to perform preprocessing on the physiological signals and the video signal to generate two-dimensional spatial data, and the data is fused by the data fusion module; the public feature extraction module is configured to perform feature extraction and fusion on the fused signal to generate feature maps of a plurality of scales and summarize the feature maps; and the multi-head feature extraction module is configured to fuse the feature maps of the plurality of scales to obtain a high-dimensional feature map, and generate a prediction result according to the high-dimensional feature map; and training the initial neural network model by using the training sample set, and finally obtaining the human-factor intelligent state monitoring model. In the training method provided by the present disclosure, the training sample set is constructed based on the electrocardiographic signal, the electroencephalographic signal, the electromyographic signal, and the video signal, with comprehensive data. One-dimensional waveform data and two-dimensional image (video) data are combined and fused in the channel direction to generate three-dimensional data, enabling the model to perform monitoring by using multi-modal synchronous data and improving the monitoring accuracy. The constructed initial network model has the public feature extraction module and the multi-head feature extraction module, which can extract features accurately and comprehensively, further improving the monitoring accuracy. In addition, compared with existing models such as a recurrent neural network, the constructed initial network model has a faster calculation speed, improving the monitoring efficiency.

## BRIEF DESCRIPTION OF THE DRAWINGS

FIG. 1 is a schematic diagram of blocks of a training method for a human-factor intelligent state monitoring model with multimodal synchronous data fusion in an embodiment of the present disclosure.
FIG. 2 is a structural flowchart of a human-factor intelligent state monitoring model with multimodal synchronous data fusion in an embodiment of the present disclosure.
FIG. 3 is a schematic waveform diagram of performing multi-cycle decomposition on an electrocardiographic signal in an embodiment of the present disclosure.
FIG. 4 is a schematic waveform diagram of a two-dimensional electrocardiographic signal in an embodiment of the present disclosure.
FIG. 5 is a structural flowchart of a dense fusion layer in an embodiment of the present disclosure.
FIG. 6 is an execution flowchart of a public feature extraction module in an embodiment of the present disclosure.
FIG. 7 is a structural diagram of a training apparatus for a human-factor intelligent state monitoring model with multimodal synchronous data fusion in an embodiment of the present disclosure.
FIG. 8 is a structural diagram of a human-factor intelligent state monitoring apparatus with multimodal synchronous data fusion in an embodiment of the present disclosure.

## DETAILED DESCRIPTION

Technical solutions in embodiments of the present disclosure are described below in combination with the accompanying drawings in the embodiments of the present disclosure. Obviously, the described embodiments are some of the embodiments of the present disclosure, rather than all of them. Based on the embodiments of the present disclosure, all other embodiments obtained by those skilled in the art without any inventive effort fall within the scope of the present disclosure.

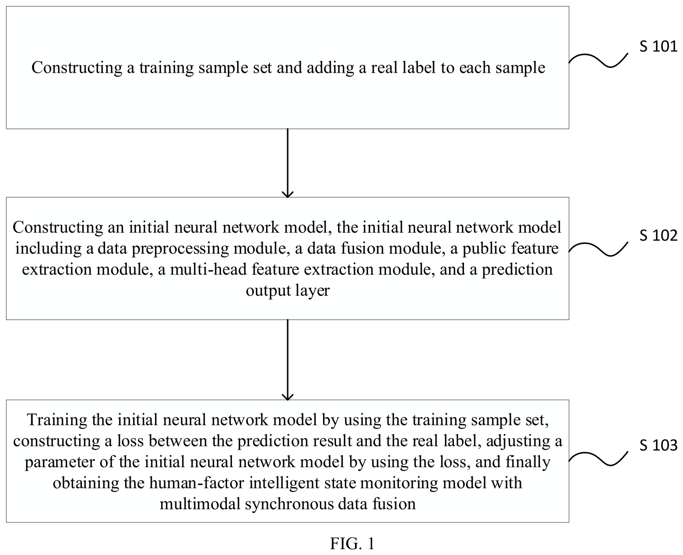

To solve problems of low monitoring efficiency, low accuracy, a high computing cost, and inapplicability to two-dimensional data such as an image or a video in an existing monitoring solution for a human-factor intelligent state, the present disclosure provides a training method for a human-factor intelligent state monitoring model with multimodal synchronous data fusion. As shown in FIG. 1, the method includes operations at blocks S101 to S103.

At block S101, a training sample set is constructed. The training sample set includes a plurality of samples. Each of the plurality of samples includes collected physiological signals and a video signal of a person. The physiological signals include an electrocardiographic signal, an electroencephalographic signal, and an electromyographic signal. A real label is added to each sample.

At block S102, an initial neural network model is constructed. The initial neural network model includes a data preprocessing module, a data fusion module, a public feature extraction module, a multi-head feature extraction module, and a prediction output layer. The public feature extraction module includes a convolution layer, a dense fusion layer, and a spatial pyramid pooling layer.

The data preprocessing module is configured to perform first data preprocessing operation on the physiological signals in each sample to obtain two-dimensional physiological signals, extract a key frame of the video signal in each sample by using a predetermined deep learning method, and perform second data preprocessing operation on the key frame to obtain a two-dimensional video signal.

The data fusion module is configured to fuse the two-dimensional physiological signals and the two-dimensional video signal in a channel direction to generate a three-dimensional fusion signal.

The public feature extraction module is configured to perform feature extraction and fusion on the three-dimensional fusion signal by using the convolution layer and the dense fusion layer to generate feature maps of different scales, and summarize the feature maps through pyramid pooling operations of different scales by using the spatial pyramid pooling layer.

The multi-head feature extraction module is configured to fuse the feature maps of different scales obtained by the public feature extraction module to obtain a high-dimensional feature map.

The prediction output layer is configured to generate a prediction result of a corresponding sample according to the high-dimensional feature map.

At block S103, the initial neural network model is trained by using the training sample set, a loss between the prediction result and the real label is constructed, a parameter of the initial neural network model is adjusted by using the loss, and the human-factor intelligent state monitoring model with multimodal synchronous data fusion is finally obtained.

In block S101, a training sample set for model training is first constructed.

In some embodiments, a portable biological information collection device is used to synchronously collect the physiological signals of the person, and a camera is used to collect a video signal of the person. The physiological signals include the electrocardiographic signal, the electroencephalographic signal, and the electromyographic signal. Exemplarily, $X_1$ represents the electrocardiographic signal, $X_2$ represents the electroencephalographic signal, and $X_3$ represents the electromyographic signal. The video signal includes a facial expression, a facial movement, a limb movement, and the like of human-factor intelligence.

In some embodiments, a normal or abnormal real label is added to each sample. When the person is in a normal driving state, a corresponding sample is labeled as 0. When the person is in an abnormal driving state, a corresponding sample is labeled as 1. The abnormal driving state includes fatigue driving, distracted driving, and other situations.

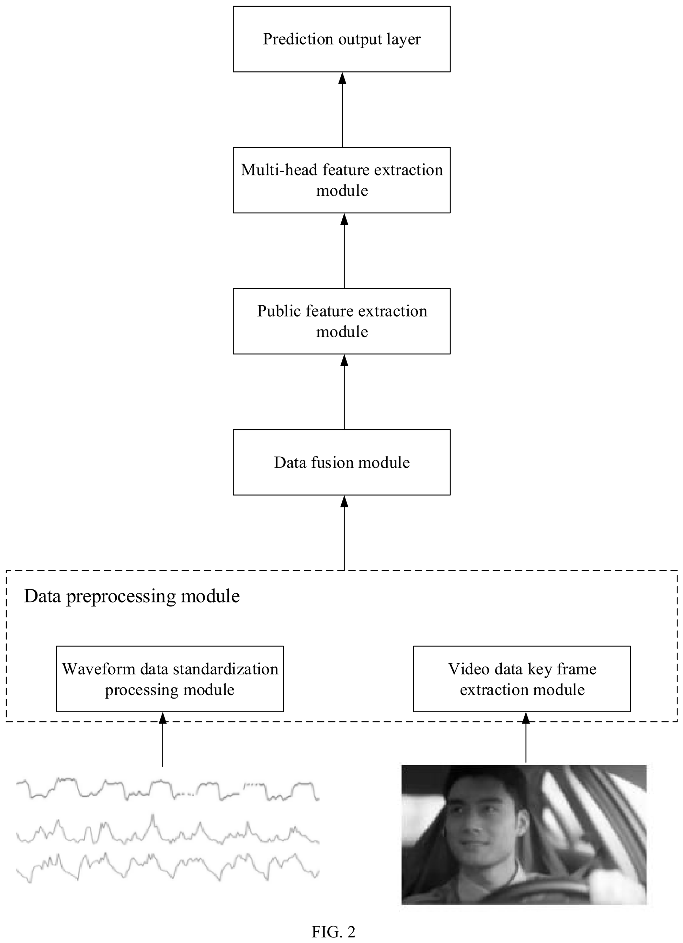

In block S102, the initial neural network model is constructed. As shown in FIG. 2, the initial neural network model includes the data preprocessing module, the data fusion module, the public feature extraction module, the multi-head feature extraction module, and the prediction output layer.

In the data preprocessing module, the physiological signals and the video signal in the sample are preprocessed to improve signal quality, and are converted into a required dimensional data form. The data preprocessing module may be subdivided into a waveform data standardization processing module and a video data key frame extraction module that perform data preprocessing operation on the physiological signals and the video signal, respectively.

Specifically, the waveform data standardization processing module performs the first data preprocessing operation on the physiological signals in each sample to obtain the two-dimensional physiological signals.

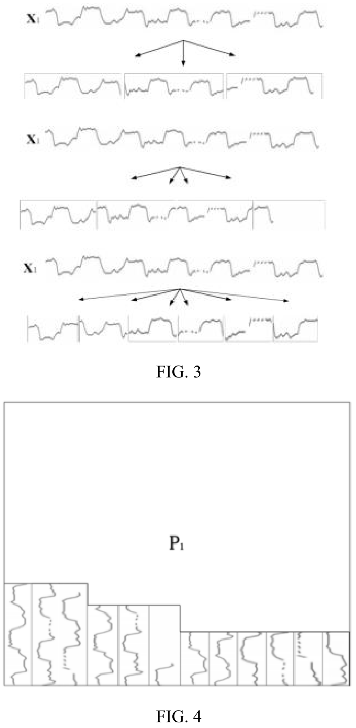

Fast Fourier transform is performed on each of the electrocardiographic signal $X_1$, the electroencephalographic signal $X_2$, and the electromyographic signal $X_3$ in the physiological signals, to obtain a corresponding electrocardiographic amplitude-frequency characteristic map, a corresponding electroencephalographic amplitude-frequency characteristic map, and a corresponding electromyographic amplitude-frequency characteristic map. A predetermined number of (denoted as N) frequencies with the largest amplitudes are respectively extracted from the electrocardiographic amplitude-frequency characteristic map, the electroencephalographic amplitude-frequency characteristic map, and the electromyographic amplitude-frequency characteristic map to obtain electrocardiographic frequencies $K_{11}, K_{12}, ...,$ and $K_{1N}$, electroencephalographic frequencies $K_{21}, K_{22}, ...,$ and $K_{2N}$, and electromyographic frequencies $K_{31}, K_{32}, ...,$ and $K_{3N}$. As shown in FIG. 3, when cycles corresponding to the electrocardiographic frequencies $K_{11}, K_{12}, ...,$ and $K_{1N}$ are set as $T_{11}, T_{12}, ...,$ and $T_{1N}$, the multi-cycle decomposition is performed on the electrocardiographic signal $X_1$ by using the electrocardiographic cycles $T_{11}, T_{12}, ...,$ and $T_{1N}$ to generate an electrocardiographic decomposition result. When cycles corresponding to the electroencephalographic frequencies $K_{21}, K_{22}, ...,$ and $K_{2N}$ are set as $T_{21}, T_{21}, ...,$ and $T_{2N}$, the multi-cycle decomposition is performed on the electrocardiographic signal $X_2$ by using the electrocardiographic cycles $T_{21}, T_{21}, ...,$ and $T_{2N}$ to generate an electroencephalographic decomposition result. When cycles corresponding to the electroencephalographic frequencies $K_{31}, K_{32}, ...,$ and $K_{3N}$ are set as $T_{31}, T_{32}, ...,$ and $T_{3N}$, the multi-cycle decomposition is performed on the electromyographic signal $X_3$ by using the electromyographic cycles $T_{31}, T_{32}, ...,$ and $T_{3N}$ to generate an electromyographic decomposition result. Data dimension raising is respectively performed on the electrocardiographic decomposition result, the electroencephalographic decomposition result, and the electromyographic decomposition result, and the results are expanded from a one-dimensional space to a two-dimensional space, to obtain a two-dimensional electrocardiographic signal $P_1$, a two-dimensional electroencephalographic signal $P_2$, and a two-dimensional electromyographic signal $P_3$.

The data dimension raising refers to stacking the results of the multi-cycle decomposition on a two-dimensional plane. Since different cycles correspond to different data dimensions, data missing caused by different data lengths during the stacking is filled with the number 0. After performing the data dimension raising, the two-dimensional electrocardiographic signal, the two-dimensional electroencephalographic signal, and the two-dimensional electromyographic signal are obtained. For example, the two-dimensional electrocardiographic signal $P_1$ is shown in FIG. 4.

The video data key frame extraction module is configured to extract the key frame of the video signal in each sample by using the predetermined deep learning method. Exemplarily, in the deep learning method, Deep Keyframe Detection in Human Action Video is selected to extract M key frames. The second data preprocessing operation is performed on the extracted key frames to obtain the two-dimensional video signal:

The key frame is converted into a grayscale image to obtain a grayscale key frame. The grayscale key frame is cut to cause a dimension of the cut grayscale key frame to be the same as dimensions of the two-dimensional electrocardiographic signal $P_1$, the two-dimensional electroencephalographic signal $P_2$, and the two-dimensional electromyographic signal $P_3$. The cut grayscale key frames are denoted as $F_1$, $F_2$, ..., and $F_M$, all of which are two-dimensional spatial data.

In the data fusion module, the two-dimensional physiological signals $P_1$, $P_2$, and $P_3$ and the two-dimensional video signals $F_1$, $F_2$, ..., and $F_M$ are fused in the channel direction to generate the three-dimensional fusion signal. A size of the three-dimensional fusion signal is $H \times W \times C$, where $H$ represents a height of the three-dimensional fusion signal, $W$ represents a width of the three-dimensional fusion signal, and $C$ represents the channel.

The public feature extraction module includes the convolution layer, the dense fusion layer, and the spatial pyramid pooling layer.

In some embodiments, the image has a change in its size after being subjected to processing of the convolution layer. The public feature extraction module is configured to perform feature extraction on an input image by using the convolution layer to generate a first intermediate feature map. A size of the first intermediate feature map is calculated by the following equation (1):

$$A = \frac{W - K + 2P}{S} + 1 ; \qquad\qquad (1)$$

where $A$ represents a height (or width) of the first intermediate feature map, $W$ represents a height (or width) of the input image, $K$ represents a convolution kernel size of the convolution layer, $P$ represents an extended pixel of the convolution layer, and $S$ represents a jump step size of the convolution layer.

It is verified that when the step size S is 2, convolution operation may reduce the size of the image to half of its original size, i.e., a width and height of the image are each reduced to half of their original values.

The dense fusion layer (DC2F) is an optimized solution proposed based on C2F to solve a gradient divergence problem of a deep network.

In some embodiments, the dense fusion layer includes a segmentation module, a bottleneck module, a channel merging module, and a $1 \times 1$ convolution block.

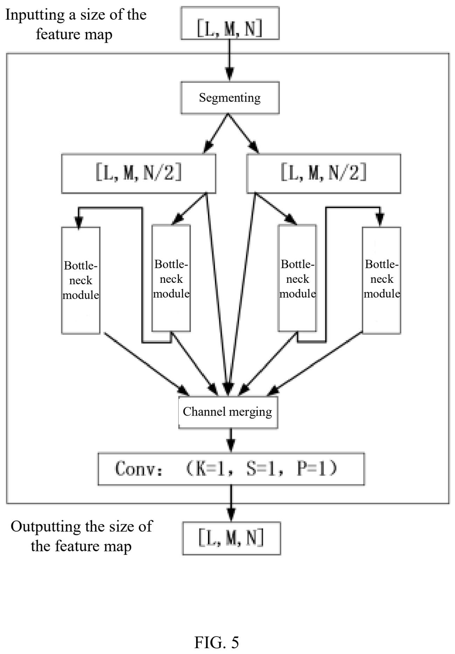

In some embodiments, as shown in FIG. 5, the dense fusion layer performs the feature fusion on the first intermediate feature map generated by the convolution layer to generate a second intermediate feature map, which includes the following operations.

The segmentation module segments the first intermediate feature map into a first segmented image and a second segmented image that are the same in size. Exemplarily, in response to a size of the first intermediate feature map being [$L, M, N$], the sizes of the first segmented image and the second segmented image are [$L, M, N/2$], where the first segmented image is denoted as $PL$, and the second segmented image is denoted as $PR$. In a convolutional neural network in the field of computer vision, a size of a feature map is typically represented as [$L, M, N$], where $L, M$, and $N$ represent a length, width, and depth of the feature map, respectively.

The bottleneck module performs two consecutive bottleneck operations on the first segmented image $PL$ to obtain a first bottleneck image $PL_2$ and a first secondary bottleneck image $PL_3$. The bottleneck module performs the two consecutive bottleneck operations on the second segmented image $PR$ to obtain a second bottleneck image $PR_2$ and a second secondary bottleneck image $PR_3$.

The channel merging module performs channel fusion on the first secondary bottleneck image $PL_3$, the first bottleneck image $PL_2$, the first segmented image $PL$, the second secondary bottleneck image $PR_3$, the second bottleneck image $PR_2$, and the second segmented image $PR$ sequentially to obtain a fused feature map.

The $1 \times 1$ convolution block performs convolution operation on the fused feature map, with a step size of 1, an extended pixel of 0, and C convolution kernels, which makes the second intermediate feature map outputted by the dense fusion layer and the first intermediate feature map inputted by the dense fusion layer be the same in size.

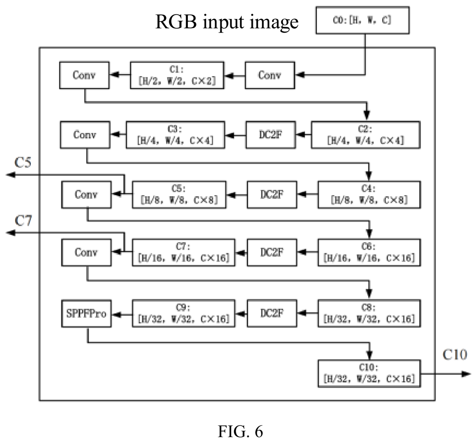

In the public feature extraction module, the feature extraction and fusion are performed on the three-dimensional fusion signal by using the convolution layer and the dense fusion layer to generate the feature maps of different scales, and the feature maps are summarized through the pyramid pooling operations of different scales by using the spatial pyramid pooling layer. As shown in FIG. 6, the specific steps S102101 to S102111 are included below.

At step S102101, a three-dimensional fusion signal inputted by the data fusion module is received and denoted as $C_0$ with a size of [$H, W, C$].

At step S102102, the convolution operation is performed on the three-dimensional fusion signal by using the convolution layer to obtain $C_1$ with a size of [$H/2, W/2, C \times 2$]. A convolution layer parameter is *Conv:* ($K = 3, S = 2, P = 1$), where $K$ represents the convolution kernel size $3 \times 3$, $S$ represents the jump step size, and $P$ represents the extended pixels. The same logic applies to the following content, and no further explanation will be provided.

At step S102103, the convolution operation is performed on $C_1$ by using the convolution layer to obtain $C_2$ with a size of [$H/4, W/4, C \times 4$]. The convolution layer parameter is *Conv:* ($K = 3, S = 2, P = 1$).

At step S102104, DC2F operation is performed on $C_2$ by using the dense fusion layer to obtain $C_3$ with a size of [$H/4, W/4, C \times 4$].

At step S102105, the convolution operation is performed on $C_3$ by using the convolution layer to obtain $C_4$ with a size of [$H/8, W/8, C \times 8$]. The convolution layer parameter is *Conv:* ($K = 3, S = 2, P = 1$).

At step S102106, the DC2F operation is performed on $C_4$ by using the dense fusion layer to obtain $C_5$ with a size of [$H/8, W/8, C \times 8$].

At step S102107, the convolution operation is performed on $C_5$ by using the convolution layer to obtain $C_6$ with a size of [$H/16, W/16, C \times 16$]. The convolution layer parameter is *Conv:* ($K = 3, S = 2, P = 1$).

At step S102108, the DC2F operation is performed on $C_6$ by using the dense fusion layer to obtain $C_7$ with a size of [$H/16, W/16, C \times 16$].

At step S102109, the convolution operation is performed on $C_7$ by using the convolution layer to obtain $C_3$ with a size of [$H/32, W/32, C \times 16$]. The convolution layer parameter is *Conv:* ($K = 3, S = 2, P = 1$).

At step S102110, the DC2F operation is performed on $C_8$ by using the dense fusion layer to obtain $C_9$ with a size of [$H/32, W/32, C \times 16$].

At step S102111, spatial pyramid pooling fusion operation is performed on $C_9$ by using the spatial pyramid pooling layer to obtain $C_{10}$ with a size of [$H/32, W/32, C \times 16$].

The multi-head feature extraction module further has the dense fusion layer. The multi-head feature extraction module is configured to: perform upsampling operation on the feature map summarized by the public feature extraction module, perform channel merging operation with other feature maps of different scales, perform feature fusion operation by using the dense fusion layer, and perform convolution operation by using a predetermined convolution layer, and finally obtain a plurality of high-dimensional feature maps of different scales based on the above operations. Specifically, steps S102201 to 102215 are included below.

At step S102201, the upsampling operation is performed on the feature map $C_{10}$ summarized by the public feature extraction module to obtain $C_{11}$ with a size of [$H/16, W/16, C \times 16$].

At step S102202, the channel merging operation is performed on $C_{11}$ and $C_7$ extracted from the public feature extraction module to obtain $C_{12}$ with a size of [$H/16, W/16, C \times 32$].

At step S102203, the DC2F operation is performed on $C_{12}$ by using the dense fusion layer to obtain $C_{13}$ with a size of [$H/16, W/16, C \times 32$].

At step S102204, the convolution operation is performed on $C_{13}$ to obtain $C_{14}$ with a size of [$H/16, W/16, C \times 8$]. A convolution parameter is *Conv:* ($K = 1, S = 1, P = 0$).

At step S102205, the upsampling operation is performed on $C_{14}$ to obtain $C_{15}$ with a size of [$H/8, W/8, C \times 8$].

At step S102206, the channel merging operation is performed on $C_{15}$ and $C_5$ extracted from the public feature extraction module to obtain $C_{16}$ with a size of [$H/8, W/8, C \times 16$].

At step S102207, the DC2F operation is performed on $C_{16}$ by using the dense fusion layer to obtain $C_{17}$ with a size of [$H/8, W/8, C \times 16$].

At step S102208, the convolution operation is performed on $C_{17}$ to obtain $C_{18}$ with a size of [$H/8, W/8, C \times 8$]. The convolution parameter is *Conv:* ($K = 1, S = 1, P = 0$).

At step S102209, the convolution operation is performed on $C_{18}$ to obtain $C_{19}$ with a size of [$H/16, W/16, C \times 8$]. The convolution parameter is *Conv:* ($K = 3, S = 2, P = 1$).

At step S102210, the channel merging operation is performed on $C_{19}$ and $C_{14}$ to obtain $C_{20}$ with a size of [$H/16, W/16, C \times 16$].

At step S102211, the DC2F operation is performed on $C_{20}$ by using the dense fusion layer to obtain $C_{21}$ with a size of [$H/16, W/16, C \times 16$].

At step S102212, the convolution operation is performed on $C_{21}$ to obtain $C_{22}$ with a size of [$H/32, W/32, C \times 16$]. The convolution parameter is *Conv:* ($K = 3, S = 2, P = 1$).

At step S102213, the channel merging operation is performed on $C_{22}$ and $C_{10}$ summarized by the public feature extraction module to obtain $C_{23}$ with a size of [$H/32, W/32, C \times 32$].

At step S102214, the convolution operation is performed on $C_{23}$ to obtain $C_{24}$ with a size of [$H/32, W/32, C \times 16$]. The convolution parameter is *Conv:* ($K = 1, S = 1, P = 0$).

At step S102215, the DC2F operation is performed on $C_{24}$ by using the dense fusion layer to obtain $C_{25}$ with a size

of $[H/32, W/32, C \times 16]$.

Finally, the multi-head feature extraction module outputs three high-dimensional feature maps of scales of $C_{18}$, $C_{21}$, and $C_{25}$.

In the prediction output layer, the prediction result of the corresponding sample is generated according to the high-dimensional feature map.

In some embodiment, average pooling operation is performed on the high-dimensional feature map, and activating operation is performed by using a Softmax function to obtain a corresponding prediction result, i.e., the prediction result is a voting result of the predictions from $C_{18}$, $C_{21}$, and $C_{25}$. Based on this prediction result, the human-factor intelligent state may be determined.

In block S103, the initial neural network model is trained by using the training sample set, and the loss between the prediction result and the real label is constructed. The parameter of the initial neural network model is adjusted by using the loss. Finally, the human-factor intelligent state monitoring model with multimodal synchronous data fusion is obtained.

In some embodiments, the loss is a binary cross-entropy loss.

It should be understood by those of ordinary skill in the art that the human-factor intelligent state in the present disclosure includes human-factor intelligent driving states, such as a driver's driving state, a human-vehicle interactive driving state, and an unmanned driving state, which are not limited herein. It should be clarified that the present disclosure is not limited to the driving states but may also be applied to states in other fields, such as a classroom concentration state, an emotional state, a fatigue state, and a stress state.

The present disclosure further provides a human-factor intelligent state monitoring method with multimodal synchronous data fusion. The method includes steps S201 to S202.

At step S201, physiological signals and a video signal of a person are collected. The physiological signals include an electrocardiographic signal, an electroencephalographic signal, and an electromyographic signal.

At step S202, the physiological signals and the video signal are inputted into the human-factor intelligent state monitoring model with multimodal synchronous data fusion obtained by the training method for the human-factor intelligent state monitoring model with multimodal synchronous data fusion as described above to generate a corresponding prediction result, to determine a human-factor intelligent state.

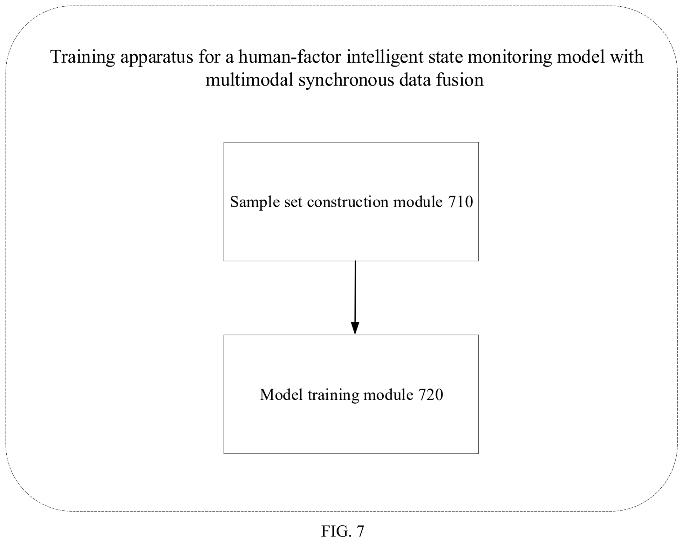

Correspondingly, the present disclosure provides a training apparatus for the human-factor intelligent state monitoring model with multimodal synchronous data fusion. As shown in FIG. 7, the training apparatus for the human-factor intelligent state monitoring model with multimodal synchronous data fusion includes a sample set construction module 710 and a model training module 720.

Specifically, the sample set construction module 710 is configured to collect and organize physiological signals and video signals of a plurality of persons to construct a training sample set, and a label is added to each sample in the training sample set.

The model training module 720 is configured to use the training sample set constructed by the sample set construction module 710, and train the initial neural network model based on the training method for the human-factor intelligent state monitoring model with multimodal synchronous data fusion as described above, to obtain the human-factor intelligent state monitoring model with modal data fusion.

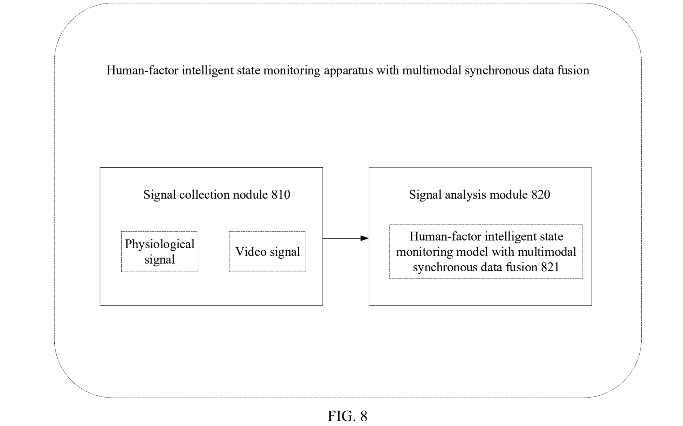

Correspondingly, the present disclosure provides a human-factor intelligent state monitoring apparatus with multimodal synchronous data fusion. As shown in FIG. 8, the human-factor intelligent state monitoring apparatus with multimodal synchronous data fusion includes a signal collection module 810 and a signal analysis module 820.

Specifically, the signal collection module 810 is configured to collect physiological signals and a video signal of a person.

The signal analysis module 820 includes the human-factor intelligent state monitoring model 821 with multimodal synchronous data fusion that is trained through the training method for the human-factor intelligent state monitoring model with multimodal synchronous data fusion as described above. The signal analysis module 820 is configured to input the collected physiological signals and the collected video signals into the human-factor intelligent state monitoring model 821 with multimodal synchronous data fusion to obtain the human-factor intelligent state.

It should be noted that the description of the apparatus embodiments corresponds to the description of their respective method embodiments. Therefore, for parts not described in detail, reference may be made to the above method embodiments.

The present disclosure further provides a device, including a processor and a memory. The memory is configured to store a computer program. The processor is configured to invoke and run the computer program stored in the memory to execute the training method for the human-factor intelligent state monitoring model with multimodal synchronous data fusion or the human-factor intelligent state monitoring method with multimodal synchronous data fusion as described above.

The present disclosure further provides an apparatus, including a processor. The processor is configured to invoke and run a computer program from a memory, causing the apparatus mounted with the device to execute the training method for the human-factor intelligent state monitoring model with multimodal synchronous data fusion or the human-factor intelligent state monitoring method with multimodal synchronous data fusion as described above.

The present disclosure further provides a computer-readable storage medium, having a computer program stored thereon. The computer program, when executed by a processor, implements the training method for the human-factor intelligent state monitoring model with multimodal synchronous data fusion or the human-factor intelligent state monitoring method with multimodal synchronous data fusion as described above. The computer-readable storage medium may be a tangible storage medium such as a Random Access Memory (RAM), a memory, a Read-Only Memory (ROM), an electrically programmable ROM, an electrically erasable programmable ROM, a register, a floppy disk, a hard disk, a removable storage disk, a CD-ROM, or any other form of storage medium known in the art.

The present disclosure further provides a computer program product. The computer program product includes a computer program instruction. The computer program instruction causes a computer to execute the training method for the human-factor intelligent state monitoring model with multimodal synchronous data fusion or the human-factor intelligent state monitoring method with multimodal synchronous data fusion as described above.

In summary, the present disclosure provides a training method, monitoring method and apparatus for a human-factor intelligent state monitoring model with multimodal synchronous data fusion. The training method includes: constructing a training sample set by collecting physiological signals and a video signal of a person, in which: an initial neural network model including a data preprocessing module, a data fusion module, a public feature extraction module, a multi-head feature extraction module, and the like; the data preprocessing module is configured to perform preprocessing on the physiological signals and the video signal to generate two-dimensional spatial data, and the data is fused by the data fusion module; the public feature extraction module is configured to perform feature extraction and fusion on the fused signal to generate feature maps of a plurality of scales and summarize the feature maps; and the multi-head feature extraction module is configured to fuse the feature maps of the plurality of scales to obtain a high-dimensional feature map, and generate a prediction result according to the high-dimensional feature map; and training the initial neural network model by using the training sample set, and finally obtaining the human-factor intelligent state monitoring model. In the training method provided by the present disclosure, the training sample set is constructed based on the electrocardiographic signal, the electroencephalographic signal, the electromyographic signal, and the video signal, with comprehensive data. One-dimensional waveform data (multivariate time series data that includes electrocardiographic waveform data and electroencephalographic waveform data) and two-dimensional image (video) data are combined and fused in the channel direction to generate three-dimensional data, enabling the model to perform monitoring by using multi-modal synchronous data and improving monitoring accuracy. The constructed initial network model has the public feature extraction module and the multi-head feature extraction module, which can extract features accurately and comprehensively, further improving the monitoring accuracy. In addition, compared with existing models such as a recurrent neural network, the constructed initial network model has a faster calculation speed, improving monitoring efficiency.

It is to be understood that the processor in the embodiment of the present disclosure may be an integrated circuit chip with signal processing capability. In an implementation, the steps of the above method embodiments can be implemented by hardware integrated logic circuits in a processor or instructions in the form of software. The above processor can be a general purpose processor, a Digital Signal Processor (DSP), an Application Specific Integrated Circuit (ASIC), a Field Programmable Gate Array (FPGA) or other programmable logic devices, a discrete gate or transistor logic device, or a discrete hardware component. The methods, steps, and logical block diagrams disclosed in the embodiments of the present disclosure can be implemented or performed. The general purpose processor may be a microprocessor or the processor may be any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as a Random Access Memory (RAM), a flash memory, a Read-Only Memory (ROM), a Programmable ROM, an electrically erasable programmable memory, or a register. The storage medium is located in the memory, and the processor reads information from the memory and performs the steps of the above methods in combination with its hardware.

It can be appreciated that the memory in the embodiments of the present disclosure may be a transitory memory or a non-transitory memory, or may include both transitory and non-transitory memories. Here, the non-transitory memory may be a ROM, a Programmable ROM (PROM), an Erasable PROM (EPROM), an Electrically EPROM (EEPROM), or a flash memory. The transitory memory may be an RAM, which is used as an external cache. As illustrative, rather than limiting, many forms of RAMs are available, including for example Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

Those skilled in the art could be aware that, exemplary components, systems, and methods described in combination with embodiments disclosed herein may be implemented by hardware, software, or a combination thereof. Whether these functions are executed by hardware or software is dependent on particular use and design constraints of the technical solutions. Professionals may adopt different methods for different particular uses to implement described functions, which should not be regarded as going beyond the scope of the present disclosure. When implemented in hardware, elements of the present disclosure may be, for example, electronic circuits, Application Specific Integrated Circuits (ASICs), appropriate firmware, plug-ins, and function cards. When implemented in software, the elements of the present disclosure are programs or code segments used to execute required tasks. The programs or the code segments may be stored in a machine-readable medium or transmitted over a transmission medium or a communication link via a data signal carried in a carrier wave.

Those skilled in the art could be aware that, exemplary units and algorithm steps described in combination with embodiments disclosed herein may be implemented by electronic hardware or in a combination of computer software and electronic hardware. Whether these functions are executed by hardware or software depends upon the specific use and design constraints of the technical solutions. Those skilled in the art may adopt different methods for different specific uses to implement described functions, which should not be regarded as going beyond the scope of the present disclosure.

Those skilled in the art can clearly understand that, for the convenience and conciseness of the description, for the specific operation processes of the systems, apparatuses, and units described above, reference can be made to the corresponding processes in the above method embodiments, and details thereof will be omitted here.

In the embodiments of the present disclosure, it can be appreciated that the disclosed systems, apparatuses, and methods may be implemented in other ways. For example, the apparatus embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between apparatuses or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer-readable storage medium. Based on this understanding, all or part of the technical solutions according to the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include various mediums capable of storing program codes, such as a Universal Serial Bus flash drive, a mobile hard disk, an ROM, an RAM, a magnetic disk, or an optical disc.

While the specific embodiments of the present disclosure have been described above, the protect scope of the present disclosure is not limited to these embodiments. Various variants and alternatives can be easily conceived by any of those skilled in the art without departing from the technical scope of the present disclosure. Therefore, these variants and alternatives are to be encompassed by the protect scope of present disclosure as defined by the claims as attached.

**Claims**

1. A training method for a human-factor intelligent state monitoring model with multimodal synchronous data fusion, wherein the method comprises:

   constructing a training sample set, the training sample set comprising a plurality of samples, each of the plurality of samples comprising collected physiological signals and a video signal of a person, and the physiological signals comprising an electrocardiographic signal, an electroencephalographic signal, and an electromyographic signal; and adding a real label to each of the plurality of samples;
   constructing an initial neural network model, the initial neural network model comprising a data preprocessing module, a data fusion module, a public feature extraction module, a multi-head feature extraction module, and a prediction output layer, wherein:

the public feature extraction module comprises a convolution layer, a dense fusion layer, and a spatial pyramid pooling layer;

the data preprocessing module is configured to perform first data preprocessing operation on the physiological signals in each sample to obtain two-dimensional physiological signals, extract a key frame of the video signal in each sample by using a predetermined deep learning method, and perform second data preprocessing operation on the key frame to obtain a two-dimensional video signal;

the data fusion module is configured to fuse the two-dimensional physiological signals and the two-dimensional video signal in a channel direction to generate a three-dimensional fusion signal;

the public feature extraction module is configured to perform feature extraction and fusion on the three-dimensional fusion signal by using the convolution layer and the dense fusion layer to generate feature maps of different scales, and summarize the feature maps through pyramid pooling operations of different scales by using the spatial pyramid pooling layer;

the multi-head feature extraction module is configured to fuse the feature maps of different scales obtained by the public feature extraction module to obtain a high-dimensional feature map; and

the prediction output layer is configured to generate a prediction result of a corresponding sample according to the high-dimensional feature map; and

training the initial neural network model by using the training sample set, constructing a loss between the prediction result and the real label, adjusting a parameter of the initial neural network model by using the loss, and finally obtaining the human-factor intelligent state monitoring model with multimodal synchronous data fusion.

2. The training method for the human-factor intelligent state monitoring model with multimodal synchronous data fusion according to claim 1, wherein the data preprocessing module being configured to perform the first data preprocessing operation on the physiological signals in each sample to obtain the two-dimensional physiological signal further comprises the data preprocessing module being configured to:

perform fast Fourier transform on each of the electrocardiographic signal, the electroencephalographic signal, and the electromyographic signal in the physiological signals, to obtain a corresponding electrocardiographic amplitude-frequency characteristic map, a corresponding electroencephalographic amplitude-frequency characteristic map, and a corresponding electromyographic amplitude-frequency characteristic map;

extract a predetermined number of frequencies with the largest amplitudes from the electrocardiographic amplitude-frequency characteristic map, the electroencephalographic amplitude-frequency characteristic map, and the electromyographic amplitude-frequency characteristic map to obtain an electrocardiographic frequency, an electroencephalographic frequency, and an electromyographic frequency respectively;

set a corresponding electrocardiographic cycle, a corresponding electroencephalographic cycle, and a corresponding electromyographic cycle according to the electrocardiographic frequency, the electroencephalographic frequency, and the electromyographic frequency respectively;

perform multi-cycle decomposition on the electrocardiographic signal by using the electrocardiographic cycle to generate an electrocardiographic decomposition result, perform the multi-cycle decomposition on the electroencephalographic signal by using the electroencephalographic cycle to generate an electroencephalographic decomposition result, and perform the multi-cycle decomposition on the electromyographic signal by using the electromyographic cycle to generate an electromyographic decomposition result; and

perform data dimension raising on the electrocardiographic decomposition result, the electroencephalographic decomposition result, and the electromyographic decomposition result to obtain a two-dimensional electrocardiographic signal, a two-dimensional electroencephalographic signal, and a two-dimensional electromyographic signal respectively.

3. The training method for the human-factor intelligent state monitoring model with multimodal synchronous data fusion according to claim 2, wherein said performing the second data preprocessing operation on the key frame to obtain the two-dimensional video signal further comprises:

converting the key frame into a grayscale image to obtain a grayscale key frame; and

cutting the grayscale key frame to cause a dimension of the cut grayscale key frame to be the same as dimensions of the two-dimensional electrocardiographic signal, the two-dimensional electroencephalographic signal, and the two-dimensional electromyographic signal.

4. The training method for the human-factor intelligent state monitoring model with multimodal synchronous data fusion according to claim 1, wherein the public feature extraction module is configured to perform feature extraction on an input image by using the convolution layer to generate a first intermediate feature map, wherein a size of the first intermediate feature map is:

$$A = \frac{W - K + 2P}{S} + 1 \, ,$$

where $A$ represents a height or width of the first intermediate feature map, $W$ represents a height or width of the input image, $K$ represents a convolution kernel size of the convolution layer, $P$ represents an extended pixel of the convolution layer, and $S$ represents a jump step size of the convolution layer.

5. The training method for the human-factor intelligent state monitoring model with multimodal synchronous data fusion according to claim 4, wherein the dense fusion layer comprises a segmentation module, a bottleneck module, a channel merging module, and a $1 \times 1$ convolution block.

6. The training method for the human-factor intelligent state monitoring model with multimodal synchronous data fusion according to claim 5, wherein the first intermediate feature map generated by the convolution layer is inputted into the dense fusion layer for feature fusion to generate a second intermediate feature map, and
wherein the first intermediate feature map generated by the convolution layer being inputted into the dense fusion layer for feature fusion to generate the second intermediate feature map comprises:

segmenting, by the segmentation module, the first intermediate feature map into a first segmented image and a second segmented image that are the same in size;
performing, by the bottleneck module, two consecutive bottleneck operations on the first segmented image to obtain a first bottleneck image and a first secondary bottleneck image, and performing, by the bottleneck module, the two consecutive bottleneck operations on the second segmented image to obtain a second bottleneck image and a second secondary bottleneck image;
performing, by the channel merging module, channel fusion on the first secondary bottleneck image, the first bottleneck image, the first segmented image, the second secondary bottleneck image, the second bottleneck image, and the second segmented image sequentially to obtain a fused feature map; and
performing, by the $1 \times 1$ convolution block, convolution operation on the fused feature map to adjust size.

7. The training method for the human-factor intelligent state monitoring model with multimodal synchronous data fusion according to claim 1, wherein:

the multi-head feature extraction module further comprises the dense fusion layer; and
the multi-head feature extraction module is further configured to: perform upsampling operation on the feature map summarized by the public feature extraction module, perform channel merging operation with other feature maps of different scales, perform feature fusion operation by using the dense fusion layer, and perform convolution operation by using a predetermined convolution layer, and finally obtain a plurality of high-dimensional feature maps of different scales based on the upsampling operation, the channel merging operation, the feature fusion operation and the convolution operation.

8. The training method for the human-factor intelligent state monitoring model with multimodal synchronous data fusion according to claim 7, wherein the prediction output layer being configured to generate the prediction result of the corresponding sample according to the high-dimensional feature map further comprises the prediction output layer being configured to:
perform average pooling operation on the plurality of high-dimensional feature maps and perform activating operation by using a Softmax function to obtain a corresponding prediction result.

9. A human-factor intelligent state monitoring method with multimodal synchronous data fusion, wherein the method comprises:

collecting physiological signals and a video signal of a person, the physiological signals comprising an electrocardiographic signal, an electroencephalographic signal, and an electromyographic signal; and
inputting the physiological signals and the video signal into the human-factor intelligent state monitoring model with multimodal synchronous data fusion obtained by the training method for the human-factor intelligent state monitoring model with multimodal synchronous data fusion according to any one of claims 1 to 8 to generate a corresponding prediction result, to determine a human-factor intelligent state.

10. A device, comprising:

a processor; and
a memory configured to store a computer program, wherein the processor is configured to invoke and run the computer program stored in the memory to execute the training method according to any one of claims 1 to 8 or the monitoring method according to claim 9.

11. An apparatus, comprising:
a processor, wherein the processor is configured to invoke and run a computer program from a memory, causing the apparatus mounted with the device to execute the training method according to any one of claims 1 to 8 or the monitoring method according to claim 9.

12. A computer-readable storage medium, having a computer program stored thereon, wherein the computer program, when executed by a processor, implements the training method according to any one of claims 1 to 8 or the monitoring method according to claim 9.

13. A computer program product, comprising a computer program instruction, wherein the computer program instruction causes a computer to execute the training method according to any one of claims 1 to 8 or the monitoring method according to claim 9.

Constructing a training sample set and adding a real label to each sample — S 101

Constructing an initial neural network model, the initial neural network model including a data preprocessing module, a data fusion module, a public feature extraction module, a multi-head feature extraction module, and a prediction output layer — S 102

Training the initial neural network model by using the training sample set, constructing a loss between the prediction result and the real label, adjusting a parameter of the initial neural network model by using the loss, and finally obtaining the human-factor intelligent state monitoring model with multimodal synchronous data fusion — S 103

FIG. 1

FIG. 2

FIG. 3

FIG. 4

Inputting a size of the feature map

[L, M, N]

Segmenting

[L, M, N/2]  [L, M, N/2]

Bottle-
neck
module

Bottle-
neck
module

Bottle-
neck
module

Bottle-
neck
module

Channel merging

Conv: (K=1, S=1, P=1)

Outputting the size of the feature map

[L, M, N]

FIG. 5

RGB input image

FIG. 6

Training apparatus for a human-factor intelligent state monitoring model with multimodal synchronous data fusion

Sample set construction module 710

Model training module 720

FIG. 7

Human-factor intelligent state monitoring apparatus with multimodal synchronous data fusion

Signal collection nodule 810

Physiological signal

Video signal

Signal analysis module 820

Human-factor intelligent state monitoring model with multimodal synchronous data fusion 821

FIG. 8

## INTERNATIONAL SEARCH REPORT

| | International application No. |
|---|---|
| | **PCT/CN2024/095341** |

### A. CLASSIFICATION OF SUBJECT MATTER

G06F 18/214(2023.01)i

According to International Patent Classification (IPC) or to both national classification and IPC

### B. FIELDS SEARCHED

Minimum documentation searched (classification system followed by classification symbols)

IPC: G06F, G06K, A61B

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 生理, 心电, 脑电, 肌电, 多模态, 融合, 三维, 视频, 图像, 特征图, Physiological, cardioelectric, electroencephaloelectric, myoelectric, multi, modal, fusion, three-dimensional, 3D, video, image, feature map, EEG, ECG

### C. DOCUMENTS CONSIDERED TO BE RELEVANT

| Category* | Citation of document, with indication, where appropriate, of the relevant passages | Relevant to claim No. |
|---|---|---|
| PX | CN 117150290 A (KINGFAR INTERNATIONAL INC.) 01 December 2023 (2023-12-01) claims 1-10, and description, paragraphs [0065]-[0144] | 1-13 |
| A | CN 113057633 A (SOUTH CHINA UNIVERSITY OF TECHNOLOGY et al.) 02 July 2021 (2021-07-02) description, paragraphs [0065]-[0117] | 1-13 |
| A | CN 112528815 A (XIDIAN UNIVERSITY) 19 March 2021 (2021-03-19) entire document | 1-13 |
| A | CN 116226715 A (SOUTHEAST UNIVERSITY) 06 June 2023 (2023-06-06) entire document | 1-13 |
| A | KR 20200071807 A (INHA UNIVERSITY RESEARCH AND BUSINESS FOUNDATION) 22 June 2020 (2020-06-22) entire document | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **15 August 2024** | **21 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/095341**

| Patent document cited in search report | | | Publication date (day/month/year) | Patent family member(s) | | | Publication date (day/month/year) |
|---|---|---|---|---|---|---|---|
| CN | 117150290 | A | 01 December 2023 | None | | | |
| CN | 113057633 | A | 02 July 2021 | None | | | |
| CN | 112528815 | A | 19 March 2021 | None | | | |
| CN | 116226715 | A | 06 June 2023 | None | | | |
| KR | 20200071807 | A | 22 June 2020 | KR | 102243294 | B1 | 22 April 2021 |

Form PCT/ISA/210 (patent family annex) (July 2022)

**REFERENCES CITED IN THE DESCRIPTION**

**Patent documents cited in the description**

- CN 2023109878379